# EUROPEAN PATENT SPECIFICATION

(11) **EP 3 965 366 B1**
(45) Date of publication and mention of the grant of the patent: **27.08.2025**
(21) Application number: 20194836.1
(22) Date of filing: 07.09.2020
(51) Int. Cl.: H04L 12/14, H04M 15/00, H04W 4/24, H04W 4/60

(54) **METHOD AND SYSTEM FOR ANALYZING A DATA EXCHANGE**
VERFAHREN UND SYSTEM ZUR ANALYSE VON DATENAUSTAUSCH
PROCÉDÉ ET SYSTÈME D'ANALYSE D'UN ÉCHANGE DE DONNÉES

(43) Date of publication of application: 09.03.2022
(73) Proprietor: VOLKSWAGEN AG, 38440 Wolfsburg (DE)
(72) Inventor: VAN KASTEREN, Jarno, 5688 TZ Oirschot (NL)

(56) References cited:
- CN-A- 109 510 833
- CN-A- 109 600 726
- US-A1- 2016 269 356
- US-A1- 2017 332 274
- US-A1- 2019 098 530

## Description

The present invention relates to a method and a system for analyzing a data exchange, in particular for a charging of services provided within a motor vehicle.

Today vehicle manufacturers often offer their customers the use of data that customers may use for services provided or by free web surfing within the vehicle. The Internet connection is provided by the vehicle itself. The charging of services is therefore always vehicle-related and not user-specific. However, since not only the owner of a vehicle, but also all passengers may and should be involved in the provision of data, it is desirable to bill the data used on a personal basis. In addition, it is often the case that individual persons already have subscriptions to special services and could therefore be provided with these free of charge, so that it would not make sense from an economic point of view for the vehicle manufacturer to bear the costs of the data exclusively.

Methods for regulating data exchange, which are intended to solve the problem of a lack of user-specific charging for data and services provided within a motor vehicle, at least in part, are known from the state of the art, for example from documents US 2019/098530 A1, CN 109 600 726 A, and US 2017/332274 A1. Adversely, in individual cases, the known methods are either technically too complex and therefore associated with high costs, or too uncomfortable for users.

It is therefore the objective of the present invention to at least partially eliminate the disadvantages described above. In particular, it is the objective of the present invention to provide a method as well as a system for charging services provided within a motor vehicle which may be implemented in a technically simple and cost-effective manner and at the same time offers a high degree of user comfort.

The above issue is solved by a procedure with the features of claim 1 and a system according to claim 10. Further features and details of embodiments of the invention are presented in the dependent claims, the description and the drawings. Technical features which are disclosed for the inventive process are also valid in connection with the inventive system and vice versa.

The method in accordance with the invention for charging services provided within a motor vehicle comprises receiving the user request by a server of a connection unit, the user request comprising a request to use a service provided within the motor vehicle, processing the user request within the connection unit, selecting a specific access point name on the basis of the processing, the specific access point name defines a specific execution path for transmitting data for enabling execution of the requested service within the vehicle, and executing a user-specific charging on the basis of the selected specific access point name after execution of the service within the motor vehicle has taken place. Before receiving the user request by a server of a connection unit, the user request may be sent via a communication channel. Such a communication channel could be configured as a theoretical transfer path for information such as a line, a radio channel or a virtual connection, or the like.

A motor vehicle is to be understood as any motorized vehicle, such as a passenger car, a truck, a ship, an excavator, a harvester, a crane or an airplane.. *Within* the scope of the invention, a service provided *"within"* a motor vehicle may be understood to be, in particular, a service provided *"via"* a motor vehicle (via an Internet connection of the motor vehicle). In the context of the invention, a service may be understood as a vehicle-specific service, an entertainment service or simply free web access. A vehicle-specific service may, for example, automatically alert rescue services in the event of an accident and - if necessary - guide them to the scene of the accident via GPS. A vehicle-specific service may also use a smartphone or tablet to connect to a vehicle in order to be able to quickly locate the vehicle, unlock or lock the vehicle using the terminal device, or switch on a parking heater or air conditioning system or similar remotely. Entertainment services may in particular be streaming services for videos, audio books, podcasts, newspapers or weather applications or the like. A channel for transferring a user request from a user or a user device may take the form of a wireless communication channel. It is also possible the communication between the user or user device and the server takes the form of wired communication. The server may be a proxy server, preferably a SOCKet Secure (SOCKS) server. The access point names according to the invention for the execution of the service on the basis of the processing are preferably arranged between the connection unit, advantageously between end points (SOCKETS) of the connection unit, and the backend servers for the transfer of the services. Individual procedural steps of embodiments of the method may be executed in the order listed, but may also deviate at least partially from the proposed order. It is also conceivable that one or more steps are executed repeatedly, in particular may be repeated cyclically.

In some embodiments, in the context of a fast, technically simple and secure processing of the user's request within the connecting unit, the processing of the user request takes place by reading out an allocation table. The allocation table may be in the form of a vehicle transaction type list (VTTL). A vehicle transaction type list (VTTL) may be understood here in particular as a list which may be stored within the vehicle or externally, in which the instructions for processing individual user requests relating to specific services are stored. The vehicle transaction type list (VTTL) may include entries for all or most of the persons travelling in a vehicle and most or all of the user devices used within the vehicle.

According to the invention, with regard to fast and uncomplicated processing, when the user request is processed, it is checked whether an entry exists in an allocation table for the user and/or a specific user device which defines a specific access point name for the user and/or the specific user device with regard to the user request.

In some embodiments, the definition of a specific access point name for a user and/or a specific user device may be location-dependent and/or time-dependent. A location-dependent definition of a specific access point name may be particularly country-related, so that, for example, a first specific access point name may be defined within a country, which defines, for example, charging via a vehicle manufacturer. After crossing a country border, another specific access point name may be defined for the same service, which defines, for example, charging for a vehicle owner or a passenger. A time-dependent definition of a specific access point name may be fixed in particular to a specific contract period or the like. For example, a specific service may be provided by a vehicle manufacturer for one year from the purchase of the vehicle, so that the service is defined via a first specific access point name within the first year. At the end of the year, the specific access point name may then be changed so that the charges may be billed to the vehicle owner or a passenger.

In some embodiments, in the context of a particularly user-friendly implementation of the inventive method, the execution of a registration procedure is provided. The registration procedure may comprise the entry of a user and/or a specific user device into an allocation table for the definition of specific access point names for the user and/or the specific user device with regard to specific user requests. Such a registration procedure is particularly beneficial in the context of an initial introduction or a vehicle sale or a vehicle transfer, in order to be able to introduce persons not initially considered.

In some embodiments, in the context of a compact design which is as centrally controlled as possible and a particularly flexible processing, communication may be established via an entity within the motor vehicle configured for mobile communication, hereinafter referred to as mobile communication unit. In such embodiments internet connectivity may be established via an embedded Subscriber Identity Module (eSIM) card. By using an eSIM, it is possible, for example, to easily create a plurality of different profiles which may be reconfigured later as desired.

In some embodiments the connection unit is configured to process a plurality of user requests to use a service provided within a motor vehicle , at least partially, simultaneously in order to enable simultaneous access to services for several users.

In some embodiments, in the context of a fast and secure exchange of information when transferring the data of a requested service as well as a technically simple possibility of introducing user-specific charging of individual services, the execution of services is carried out by using backend servers. Individual backend servers may be accessible via more than one access point name. Thus, for example, a vehicle manufacturer-side charging may be defined via a first access point name, whereas a driver-side charging may be defined via a second access point name of a backend server. It is understood that more than two access point names may also be provided for connecting to a backend server, which may define a different charging type, for example.

In some embodiments, in the context of a particularly convenient and user-friendly execution of the method an information is sent to a user and/or a specific user device as to how the requested service is to be charged in the context of processing the user request, preferably with the provision that the user and/or the specific user device may decide on the basis of the information whether the requested service is to be executed or not. This will allow a user to decide to cancel a service if he has to pay the cost of the service himself.

Embodiments of the invention further relate to a system for user-specific charging of services made available within a motor vehicle, for carrying out the method described above. The system comprises a communication channel for the transmission of a user request for the use of a service provided within a motor vehicle, a server of a connection unit for receiving the user request, a connection unit for processing the user request as well as a plurality of end points for connection to a plurality of individually selectable access point names for defining a specific execution path for transmitting data for enabling execution of the requested service within the vehicle on the basis of the processing in order to enable user-specific charging. The system brings the same benefits as those already described with reference to embodiments of the method described above. A communication channel could be configured as a theoretical transfer path for information such as a line, a radio channel or a virtual connection, or the like. The end points may, in particular, be in the form of nodes or starting points or the like.

According to the invention, the connection unit is formed in the form of a SOCKS gateway.

In some embodiments, in order to enable fast and secure processing of the user request within the connection unit, a storage unit may be provided for storing an allocation table for the purpose of defining specific access point names for the user and/or the specific user device. The storage unit may be located near the connection unit, in particular within the connection unit.

In some embodiments, within the scope of a compact design which is as centrally controlled as possible and a particularly flexible processing, a mobile communication unit is provided for communication within the motor vehicle. The mobile communication unit may comprise an eSIM card for establishing Internet connectivity. The mobile communication unit may be located outside the connection unit, but for example within a vehicle.

In some embodiments, in the context of a fast and secure exchange of information during the transfer of the data of a requested service as well as a technically simple possibility of introducing user-specific charging of individual services, a plurality of backend servers is provided for the execution of services. The individual backend servers of the plurality of backend server may be connected to the connection unit via more than one specific access point name in order to enable user-specific charging of the services used.

Embodiments of the invention further relate to a motor vehicle. The motor vehicle may be designed to carry out one or more embodiments of the method described above. Additionally, or alternatively, the motor vehicle may comprise one or more embodiments of the system described above.

Further benefits, features and details of embodiments of the invention will be presented in the following description, in which, with reference to the drawings, examples of how embodiments of the invention may be implemented are described.

In the drawings:
- Fig. 1: schematically shows a representation of an embodiment of a method for charging services provided within a motor vehicle according,
- Fig. 2: schematically shows a representation of an embodiment of a system for charging services provided within a motor vehicle according to an embodiment,
- Fig. 3: schematically shows a representation of a motor vehicle.

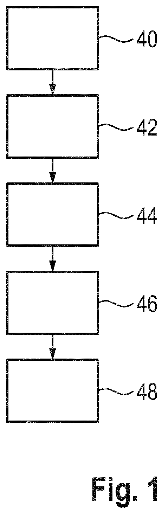

Fig. 1 shows a schematic representation of an embodiment of a method for charging services provided within a motor vehicle 26 according to an embodiment.

The method for charging services provided within a motor vehicle 26 comprises the steps of: sending 40 a user request to use a service provided within a motor vehicle 26 via a first communication channel 20; receiving 42 the user request by a server 8 of a connection unit 6, the user request comprising a request to use a service provided within the motor vehicle (26); processing 44 the user request within the connection unit 6; selecting 46 a specific access point name 22 based on the processing 44, the specific access point name (22) defines a specific execution path for transmitting data for enabling execution of the requested service within the vehicle; and executing 48 a user-specific charging based on the selected specific access point name 22 after execution of the service within the motor vehicle (26) has taken place.

The user request may be processed in particular by reading out an allocation table 18, which is preferably in the form of a vehicle transaction type list.

It is advantageous to check in accordance with the present method during processing of the user request whether an entry exists in an allocation table 18 for user 4 and/or a specific user device 4, which defines a specific access point name 22 for user 4 and/or the specific user device 4 with regard to the user request.

The definition of a specific access point name 22 for a user 4 and/or a specific user device 4 may preferably be location-dependent and/or time-dependent.

In particular for users not yet registered, the execution of a registration procedure may also be provided for, whereby the registration procedure preferably involves entering a user 4 and/or a specific user device 4 in an allocation table 18 to define specific access point names 22 for the user 4 and/or the specific user device 4 in relation to specific user requests.

Communication may be established in particular via a mobile communication unit (OCU) of the motor vehicle, whereby Internet connectivity is preferably established via an eSIM card.

In order to also enable a plurality of users or user devices to simultaneously use services provided within a motor vehicle, it is possible, according to the invention, that a plurality of user requests for the use of a service provided within a motor vehicle are received via a first communication channel 20 and processed within the connection unit 6, preferably at least partially simultaneously received and processed.

The services may be executed in particular by using backend servers 12, 14, 16, which may preferably be accessed via more than one access point name 22.

In order to give a user 4 the possibility to cancel a requested service, if it is registered that the user 4 has to pay for this service himself, it is also conceivable that a user 4 and/or a specific user device 4 will be sent information as to how the requested service will be charged in the course of processing the user's request, preferably providing that the user 4 and/or the specific user device 4 may decide on the basis of the information whether the requested service should be executed or not.

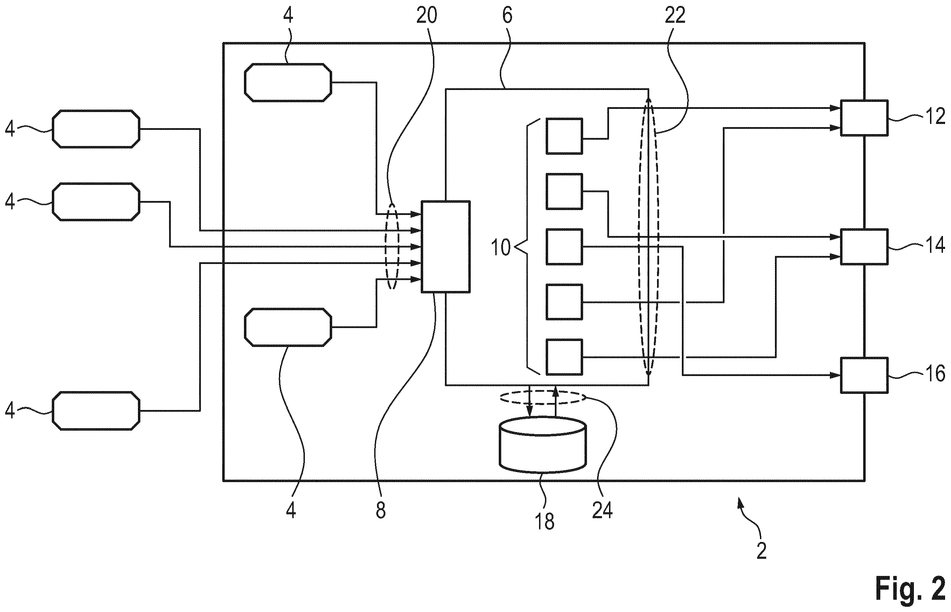

Fig. 2 shows a schematic representation of an inventive system 2 for the charging of services provided within a motor vehicle 26 according to a first example.

The system 2 comprises a plurality of communication channels 20 for transmitting a user request to use a service made available within a motor vehicle 26, a server 8 of a connection unit 6 for receiving the user requests, a connection unit 6 for processing the user requests 44 and a plurality of end points (10) for connection to a plurality of individually selectable access point names 22 for defining a specific execution path for transmitting data for enabling execution of the requested service within the vehicle on the basis of the processing 44 in order to enable user-specific charging.

Via an internally or externally arrangeable memory unit, an allocation table 18 for the definition of specific access point names 22 for the user 4 and/or the specific user device 4 may be accessed via a further communication channel 24 via the connection unit 6. Within the allocation table 18, there is preferably an entry for the specific user 4 and/or the specific user device 4 regarding the definition of a specific access point name 22 in relation to a specific user request.

Furthermore, the system comprises a plurality of backend servers 12, 14, 16 for the execution of services, which in this case are connected via specific access point names 22 to the connection unit 6, via the end points 10, to the connection unit 6, in order to enable user-specific charging of the services used. The connection unit 6 is formed advantageously in the form of a SOCKS gateway.

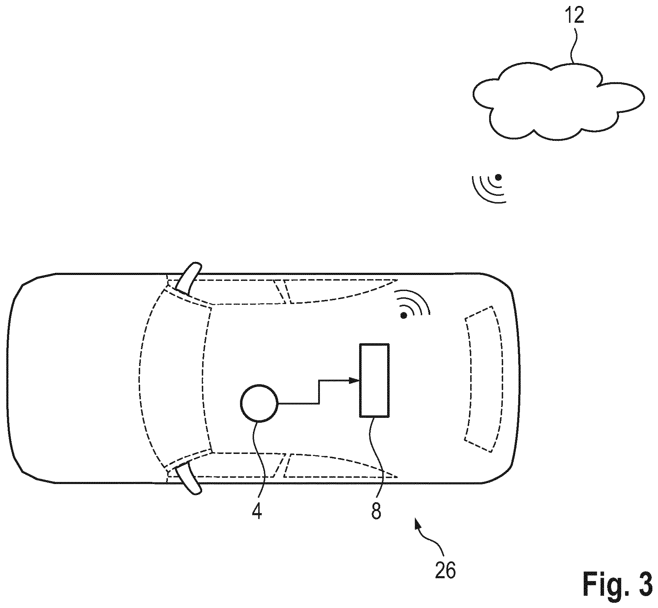

Fig. 3 shows a schematic representation of an inventive motor vehicle 26 for carrying out the inventive method, comprising a system 2 according to the invention.

The system 2 according to the invention may be at least partially located within the vehicle 26 so that the request of a user 4 or a user device 4 may be received by a server 8 located within the vehicle 26. It is understood that the server 8 and/or other components of the system 2 according to the invention may also be located remotely and may accordingly be accessible via wireless communication. In the present case, a rewriting or entry in an allocation table 18, which defines a specific access point name 22 for a user 4 and/or a specific user device 4 in relation to a specific user request, may be made by means of a communication with a first server 12, for example a server of the vehicle manufacturer.

By means of the method or system 2 according to the invention, it is in particular possible to provide in a technically simple and cost-effective manner a particularly convenient possibility of user-specific charging for services provided within a motor vehicle.

### List of reference signs

- 2: System for user-specific charging
- 4: User/user device
- 6: Connection unit
- 8: Server
- 10: End point
- 12: First backend server
- 14: Second backend server
- 16: Third backend server
- 18: Allocation table
- 20: communication channels
- 22: access point names
- 24: Further communication link
- 26: Motor vehicle

- 40: Sending a user request
- 42: Receiving the user request
- 44: Processing the user request
- 46: Selecting a specific access point name
- 48: Executing a user-specific charging

## Claims

1. A method for analyzing a data exchange, in particular for a charging of services provided within a motor vehicle (26), the method comprising:
- Receiving (42) a user request by a server (8) of a connection unit (6) in the form of a SOCKS gateway, the user request comprising a request to use a service provided within the motor vehicle (26),
- Processing (44) of the user request within the connection unit (6) in the form of a SOCKS gateway by checking whether an entry exists in an allocation table (18) for the user (4) and/or a specific user device (4), which defines a specific access point name (22) for the user (4) and/or the specific user device (4) with respect to the user request,
- Selecting (46) a specific access point name (22) based on the processing (44), the specific access point name (22) defines a specific execution path for transmitting data for enabling execution of the requested service within the vehicle,
- Executing (48) a user-specific charging based on the selected specific access point name (22) after execution of the service within the motor vehicle (26) has taken place.

2. Method according to claim 1,
**characterized in that**,
the allocation table (18) being formed in the form of a vehicle transaction type list (VTTL).

3. Method according to one of the preceding claims,
**characterized in that**,
a specific access point name (22) for a user (4) and/or a specific user device (4) is defined on the basis of location and/or time.

4. Method according to one of the preceding claims,
**characterized in that**,
the method comprises the execution of a registration process, the registration process preferably comprising entering a user (4) and/or a specific user device (4) in an allocation table (18) for defining specific access point names (22) for the user (4) and/or the specific user device (4) with respect to specific user requests.

5. Method according to one of the preceding claims,
**characterized in that**,
a communication is established via a mobile communication unit of the motor vehicle (26), wherein the internet connectivity preferably is established via an eSIM card.

6. Method according to one of the preceding claims,
**characterized in that**,
a plurality of user requests for using a service provided within a motor vehicle (26) are received via a first communication channel (20) and processed within the connection unit (6) in the form of a SOCKS gateway, preferably at least partially simultaneously received and processed.

7. Method according to one of the preceding claims,
**characterized in that**,
the method comprises the execution of services via the use of backend servers (12, 14, 16), wherein individual backend servers (12, 14, 16) are preferably accessible via more than one access point name (22).

8. Method according to one of the preceding claims,
**characterized in that**,
an information is sent to a user (4) and/or a specific user device (4) within the scope of a processing (44) of the user request as to how the requested service is to be charged, wherein it is preferably provided that the user (4) and/or the specific user device (4) may decide on the basis of the information whether the requested service is to be executed or not.

9. System (2) for analyzing a data exchange, preferably for a charging of services provided within a motor vehicle, for carrying out a method according to claims 1 to 8, comprising:
- a communication channel (20) for transmitting a user request to use a service provided within a motor vehicle (26),
- a server (8) of a connection unit (6) in the form of a SOCKS gateway for receiving (42) the user request,
- a connection unit (6) in the form of a SOCKS gateway for processing (44) the user request,
- a plurality of end points (10) for connection to a plurality of individually selectable access point names (22) for defining a specific execution path for transmitting data for enabling execution of the requested service within the vehicle based on the processing (44) to enable user-specific charging.

10. System (2) according to claim 9,
**characterized in that**,
a memory unit is provided for storing an allocation table (18) for defining specific access point names (22) for the user (4) and/or the specific user device (4).

11. System according to one of the claims 9 to 10,
**characterized in that**,
a mobile communication unit is provided for communication within the motor vehicle (26), the mobile communication unit preferably comprising an eSIM card for establishing internet connectivity.

12. System (2) according to one of the claims 9 to 11,
**characterized in that**,
a plurality of backend servers (12, 14, 16) are provided for executing services, individual backend servers (12, 14, 16) preferably being connected to the connection unit (6) in the form of a SOCKS gateway via more than one specific access point name (22) in order to enable user-specific charging of the services used.

13. Motor vehicle comprising a system according to one of claims 9 to 12.

## Patentansprüche

1. Verfahren zum Analysieren eines Datenaustauschs, insbesondere für eine Abrechnung von Diensten, die innerhalb eines Kraftfahrzeugs (26) bereitgestellt werden, das Verfahren umfassend:
- Empfangen (42) einer Benutzeranfrage durch einen Server (8) einer Verbindungseinheit (6) in Form eines SOCKS-Gateways, die Benutzeranfrage umfassend eine Anfrage, um einen Dienst, der innerhalb eines Kraftfahrzeugs (26) bereitgestellt ist, zu nutzen,
- Verarbeiten (44) der Benutzeranfrage innerhalb der Verbindungseinheit (6) in Form eines SOCKS-Gateways durch Überprüfen, ob ein Eintrag in einer Zuordnungstabelle (18) für den Benutzer (4) und/oder eine spezifische Benutzervorrichtung (4) existiert, der einen spezifischen Zugangspunktnamen (22) für den Benutzer (4) und/oder die spezifische Benutzervorrichtung (4) definiert,
- Auswählen (46) eines spezifischen Zugangspunktnamens (22) basierend auf dem Verarbeiten (44), wobei der spezifische Zugangspunktname (22) einen spezifischen Ausführungspfad zum Übertragen von Daten zum Aktivieren der Ausführung des angefragten Dienstes innerhalb des Fahrzeugs definiert,
- Ausführen (48) einer benutzerspezifischen Abrechnung basierend auf dem ausgewählten spezifischen Zugangspunktnamen (22), nachdem die Ausführung des Dienstes innerhalb des Kraftfahrzeugs (26) erfolgt ist.

2. Verfahren nach Anspruch 1,
**dadurch gekennzeichnet, dass**
die Zuordnungstabelle (18) in Form einer Fahrzeugtransaktionstypliste (VTTL) ausgebildet ist.

3. Verfahren nach einem der vorstehenden Ansprüche,
**dadurch gekennzeichnet, dass**
dass ein spezifischer Zugangspunktname (22) für einen Benutzer (4) und/oder eine spezifische Benutzervorrichtung (4) auf der Basis von Ort und/oder Zeit definiert wird.

4. Verfahren nach einem der vorstehenden Ansprüche,
**dadurch gekennzeichnet, dass**
das Verfahren die Ausführung eines Registrierungsvorgangs umfasst, der Registrierungsvorgang vorzugsweise umfassend das Eintragen eines Benutzers (4) und/oder einer spezifischen Benutzervorrichtung (4) in eine Zuordnungstabelle (18) zum Definieren spezifischer Zugangspunktnamen (22) für den Benutzer (4) und/oder die spezifische Benutzervorrichtung (4) hinsichtlich spezifischer Benutzeranfragen.

5. Verfahren nach einem der vorstehenden Ansprüche,
**dadurch gekennzeichnet, dass,** eine Kommunikation über eine mobile Kommunikationseinheit des Kraftfahrzeugs (26) hergestellt wird, wobei die Internetkonnektivität vorzugsweise über eine eSIM-Karte hergestellt wird.

6. Verfahren nach einem der vorstehenden Ansprüche,
**dadurch gekennzeichnet, dass,**
eine Vielzahl von Benutzeranfragen zum Nutzen Dienstes, der innerhalb eines Kraftfahrzeugs (26) bereitgestellt wird, über einen ersten Kommunikationskanal (20) empfangen und innerhalb der Verbindungseinheit (6) in Form eines SOCKS-Gateways verarbeitet werden, vorzugsweise mindestens teilweise gleichzeitig empfangen und verarbeitet werden.

7. Verfahren nach einem der vorstehenden Ansprüche,
**dadurch gekennzeichnet, dass** das Verfahren die Ausführung von Diensten über die Verwendung von Backend-Servern (12, 14, 16) umfasst, wobei einzelne Backend-Server (12, 14, 16) vorzugsweise über mehr als einen Zugangspunktnamen (22) erreichbar sind.

8. Verfahren nach einem der vorstehenden Ansprüche,
**dadurch gekennzeichnet, dass**
eine Informationseinheit an einen Benutzer (4) und/oder eine spezifische Benutzervorrichtung (4) innerhalb des Umfangs eines Verarbeitens (44) der Benutzeranfrage, wie der angefragte Dienst abzurechnen ist, gesendet wird, wobei vorzugsweise vorausgesetzt wird, dass der Benutzer (4) und/oder die spezifische Benutzervorrichtung (4) auf Basis der Information entscheiden können, ob der angefragte Dienst auszuführen ist oder nicht.

9. System (2) zum Analysieren eines Datenaustausches, vorzugsweise für eine Abrechnung von Diensten, die innerhalb eines Kraftfahrzeuges bereitgestellt werden, wobei das Vornehmen eines Verfahrens nach den Ansprüchen 1 bis 8, umfasst: - einen Kommunikationskanal (20) zum Übertragen einer Benutzeranfrage, um einen Dienst, der innerhalb eines Kraftfahrzeugs (26) bereitgestellt ist, zu nutzen,
- einem Server (8) einer Verbindungseinheit (6) in Form eines SOCKS-Gateways zum Empfangen (42) der Benutzeranfrage,
- eine Verbindungseinheit (6) in Form eines SOCKS-Gateways zum Verarbeiten (44) der Benutzeranfrage,
- eine Vielzahl von Endpunkten (10) für die Verbindung mit einer Vielzahl von individuell wählbaren Zugangspunktnamen (22) zum Definieren eines spezifischen Ausführungspfads zum Übertragen von Daten
zum Aktivieren der Ausführung des angeforderten Dienstes innerhalb des Fahrzeugs basierend auf dem Verarbeiten (44), um eine benutzerspezifische Abrechnung zu ermöglichen.

10. System (2) nach Anspruch 9, **dadurch gekennzeichnet, dass** eine Speichereinheit zum Speichern einer Zuordnungstabelle (18) zum Definieren spezifischer Zugangspunktnamen (22) für den Benutzer (4) und/oder die spezifische Benutzervorrichtung (4) bereitgestellt ist.

11. System nach einem der Ansprüche 9 bis 10,
**dadurch gekennzeichnet, dass** eine mobile Kommunikationseinheit für die Kommunikation innerhalb des Kraftfahrzeugs (26) bereitgestellt ist, die mobile Kommunikationseinheit vorzugsweise umfassend eine eSIM-Karte zum Herstellen einer Internetkonnektivität.

12. System (2) nach einem der Ansprüche 9 bis 11,
**dadurch gekennzeichnet, dass** eine Vielzahl von Backend-Server (12, 14, 16) zum Ausführen von Diensten bereitgestellt sind, wobei einzelne Backend-Server (12, 14, 16) vorzugsweise mit der Verbindungseinheit (6) in Form eines SOCKS-Gateways über mehr als einen spezifischen Zugangspunktnamen (22) verbunden sind, um eine benutzerspezifische Abrechnung der genutzten Dienste zu aktivieren.

13. Kraftfahrzeug, umfassend ein System nach einem der Ansprüche 9 bis 12.

## Revendications

1. Procédé permettant d'analyser un échange de données, en particulier pour une facturation de services fournis au sein d'un véhicule automobile (26), le procédé comprenant :
- la réception (42) d'une demande utilisateur par un serveur (8) d'une unité de connexion (6) sous la forme d'une passerelle SOCKS, la demande utilisateur comprenant une demande d'utilisation d'un service fourni au sein du véhicule automobile (26),
- le traitement (44) de la demande utilisateur au sein de l'unité de connexion (6) sous la forme d'une passerelle SOCKS en vérifiant s'il existe une entrée dans une table d'attribution (18) pour l'utilisateur (4) et/ou un dispositif utilisateur spécifique (4), qui définit un nom de point d'accès spécifique (22) pour l'utilisateur (4) et/ou le dispositif utilisateur spécifique (4) par rapport à la demande utilisateur,
- la sélection (46) d'un nom de point d'accès spécifique (22) sur la base du traitement (44), le nom de point d'accès spécifique (22) définit un chemin d'exécution spécifique pour la transmission de données permettant l'exécution du service demandé au sein du véhicule,
- l'exécution (48) d'une facturation spécifique à l'utilisateur sur la base du nom de point d'accès spécifique (22) sélectionné après que l'exécution du service au sein du véhicule automobile (26) a eu lieu.

2. Procédé selon la revendication 1,
**caractérisé en ce que,**
la table d'attribution (18) se présente sous la forme d'une liste de types de transactions de véhicules (VTTL).

3. Procédé selon l'une des revendications précédentes,
**caractérisé en ce que,**
un nom de point d'accès spécifique (22) pour un utilisateur (4) et/ou un dispositif utilisateur spécifique (4) est défini sur la base d'un emplacement et/ou d'un moment.

4. Procédé selon l'une des revendications précédentes,
**caractérisé en ce que,**
le procédé comprend l'exécution d'un processus d'enregistrement, le processus d'enregistrement comprenant de préférence l'entrée d'un utilisateur (4) et/ou d'un dispositif utilisateur spécifique (4) dans une table d'attribution (18) pour définir des noms de points d'accès spécifiques (22) pour l'utilisateur (4) et/ou le dispositif utilisateur spécifique (4) par rapport à des demandes utilisateur spécifiques.

5. Procédé selon l'une des revendications précédentes,
**caractérisé en ce qu'**une communication est établie par l'intermédiaire d'une unité de communication mobile du véhicule automobile (26), dans lequel la connectivité Internet est de préférence établie par l'intermédiaire d'une carte eSIM.

6. Procédé selon l'une des revendications précédentes,
**caractérisé en ce que,**
une pluralité de demandes utilisateur pour l'utilisation d'un service fourni au sein d'un véhicule automobile (26) sont reçues par l'intermédiaire d'un premier canal de communication (20) et traitées au sein de l'unité de connexion
(6) sous la forme d'une passerelle SOCKS, de préférence au moins partiellement simultanément reçues et traitées.

7. Procédé selon l'une des revendications précédentes,
**caractérisé en ce que** le procédé comprend l'exécution de services par l'intermédiaire de l'utilisation de serveurs dorsaux (12, 14, 16), dans lequel les serveurs dorsaux (12, 14, 16) individuels sont de préférence accessibles par l'intermédiaire de plus d'un nom de point d'accès (22).

8. Procédé selon l'une des revendications précédentes,
**caractérisé en ce que,**
des informations sont envoyées à un utilisateur (4) et/ou à un dispositif utilisateur spécifique (4) dans le cadre d'un traitement (44) de la demande utilisateur sur la manière dont le service demandé doit être facturé, dans lequel il est de préférence entendu que l'utilisateur (4) et/ou le dispositif utilisateur spécifique (4) peut décider, sur la base des informations, si le service demandé doit être exécuté ou non.

9. Système (2) permettant d'analyser un échange de données, de préférence pour une facturation de services fournis au sein d'un véhicule automobile, pour la mise en œuvre d'un procédé selon les revendications 1 à 8, comprenant : - un canal de communication (20) pour la transmission d'une demande utilisateur d'utilisation d'un service fourni au sein d'un véhicule automobile (26),
- un serveur (8) d'une unité de connexion (6) sous la forme d'une passerelle SOCKS pour recevoir (42) la demande utilisateur,
- une unité de connexion (6) sous la forme d'une passerelle SOCKS pour traiter (44) la demande utilisateur,
- une pluralité de points d'extrémité (10) pour la connexion à une pluralité de noms de points d'accès (22) pouvant être sélectionnés individuellement afin de définir un chemin d'exécution spécifique pour la transmission de données
pour permettre l'exécution du service demandé au sein du véhicule sur la base du traitement (44) afin de permettre une facturation spécifique à l'utilisateur.

10. Système (2) selon la revendication 9, **caractérisé en ce qu'une** unité de mémoire est prévue pour stocker une table d'attribution (18) permettant de définir des noms de points d'accès spécifiques (22) pour l'utilisateur (4) et/ou le dispositif utilisateur spécifique (4).

11. Système selon l'une des revendications 9 à 10, **caractérisé en ce qu'une** unité de communication mobile est prévue pour la communication au sein du véhicule automobile (26), l'unité de communication mobile comprenant de préférence une carte eSIM pour établir une connectivité Internet.

12. Système (2) selon l'une des revendications 9 à 11, **caractérisé en ce qu'**une pluralité de serveurs dorsaux (12, 14, 16) sont prévus pour une exécution de services, des serveurs dorsaux (12, 14, 16) individuels étant de préférence connectés à l'unité de connexion (6) sous la forme d'une passerelle SOCKS par l'intermédiaire de plus d'un nom de point d'accès spécifique (22) afin de permettre une facturation spécifique à l'utilisateur des services utilisés.

13. Véhicule automobile comprenant un système selon l'une des revendications 9 à 12.
